Europäisches Patentamt

European Patent Office

Office européen des brevets

(11) Publication number: **0 388 098**
**A1**

# (12) EUROPEAN PATENT APPLICATION

(21) Application number: **90302562.5**

(51) Int. Cl.5: **G01B 3/10**

(22) Date of filing: **09.03.90**

(30) Priority: **09.03.89 GB 8905387**

(43) Date of publication of application:
**19.09.90 Bulletin 90/38**

(84) Designated Contracting States:
**AT BE CH DE DK ES FR GB GR IT LI LU NL SE**

(71) Applicant: **ARAX LIEBERMANN LIMITED**
**1601-8 North Tower, World Finance Centre,**
**Harbour City, 19 Canton Road**
**Kowloon, Hong Kong(HK)**

(72) Inventor: **Biggel, Emil Josef**
**18 Copenhagen Street**
**Paranaque, BF Homes(PH)**

(74) Representative: **Holliday, Frank et al**
**Marks & Clerk 57-60 Lincoln's Inn Field**
**London WC2A 3LS(GB)**

(54) **Measuring apparatus.**

(57) A combined calculator and measuring apparatus includes a registration drum 8 which is engaged to be rotated by a tape 4. A series of indicia 11 and 12 are provided on a disc 10 coaxially mounted on the drum 8 to provide marking which can be read directly in metric units and imperial units respectively.

FIG.4

EP 0 388 098 A1

# MEASURING APPARATUS

This invention relates to measuring apparatus, and particularly to a combined calculator and tape-measure.

Such devices are known but for various reasons have not become readily commercially available. This is partly because existing combination calculations and tape-measures merely combine conventional individual calculators and tape-measures. It may also be partly due to the potential complexity of the device, particularly where the withdrawal of the tape from the tape-measure is supposed to produce a digital readout, which complexity increases the cost of production and hence the selling cost to a level higher than the market will bear.

According the invention there is provided a tape-measure device which includes means for deriving numerical information in electronic form, corresponding to the length of tape drawn from the tape-measure, said means comprising:
a rotatable element adapted to rotate in register with the tape as the tape is drawn from and retracted into the tape-measure, said element bearing two evenly distributed series of indicia corresponding to metric and imperial units of length respectively, `
reading means for reading said indicia and for producing an electronic signal providing said numerical information in electronic form.

Preferably, the number of indicia for each units of length in each series disposed on the rotatable element is so selected having regard to the diameter of the element as to provide a direct indication units of the length of tape drawn from or retracted into the tape-measure in imperial units and in metric units respectively.

The rotatable element may have a disc mounted thereon at one side and the indicia are provided adjacent the periphery of the disc. The indicia may be notches on the periphery of the disc, or holes or recesses spaced circumferentially about the surface of the disc.

The indicia may be a plurality of sensible elements disposed circumferentially about the surface of the disc. The elements may be metallic and capable of being sensed by a capacitative or inductive method, or light-reflecting or absorbing elements capable of being sensed by an optical method.

The device may have incorporated therewith a calculator in which the reading means comprises the display of the calculator, and in which the said numerical information in electronic form is passed internally to the calculator for the performance of mathematical or arithmetical operations thereupon.

The rotatable element preferably has an effective diameter of 40.425 mm, or multiples thereof. One of the series of indicia is formed by 127 indicia, each to represent a 1 mm unit of length. The other series of indicia has 40 indicia, each to represent one eight of an inch unit of length.

It is an important aspect of the present invention that the calculator of the combination device can receive as a direct input the length information generated by withdrawal or retraction of the tape, i.e. without a user of the device having manually to key the length data into the calculator. In preferred embodiments of the device, special functions may be provided in the calculator to perform particular arithmetic operations upon the numerical data. For example, a key may be provided so that the calculator produces a value for the circumference or area of a circle whose diameter or radius corresponds to the automatically input length data.

Another key, or combination of keys, may permit the automatic input of first length data and storage thereof, the automatic input of second length data and the multiplication of said first and second data to produce calculated areal data. Likewise another key, or combination of keys, may produce calculated volume data from three automatically input items of length data.

Likewise, the tape-measure is usable simply as a tape-measure providing an electronic display without inputting the data into the calculator.

Preferably the electronic display is a liquid crystal display although other forms of display may be employed such as light-emitting diodes, plasma displays and so on.

An embodiment of the present invention will now be described, by way of example only, by reference to the accompanying drawings, in which:

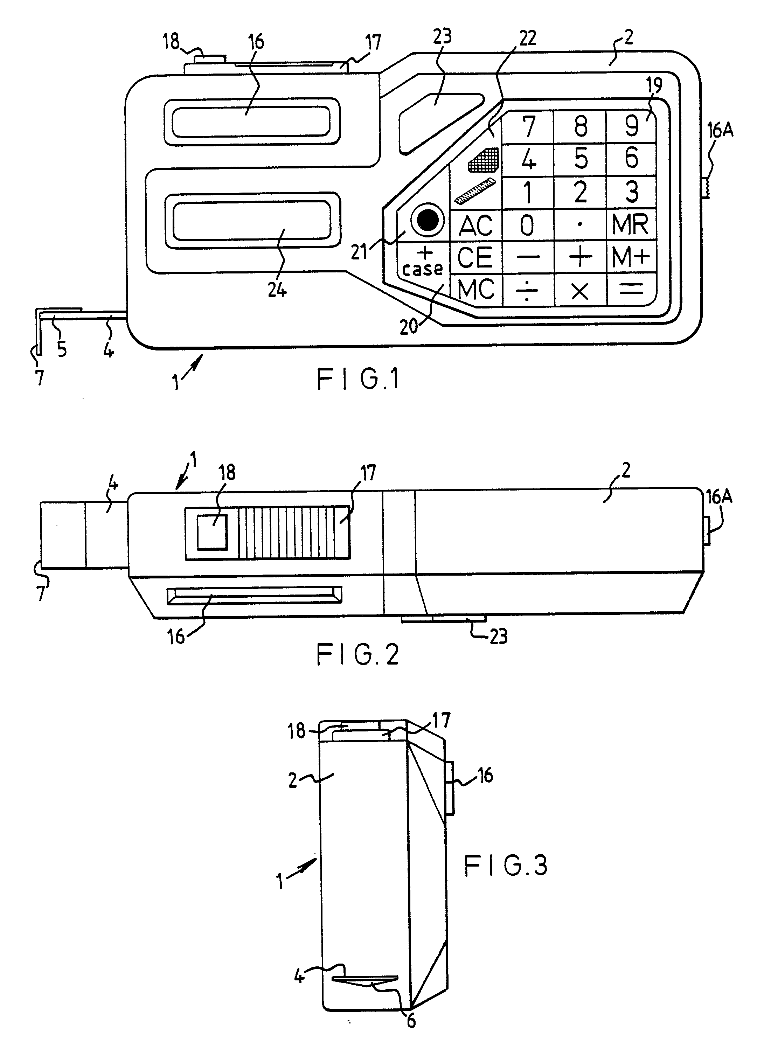

Figure 1 is a front elevation of an embodiment of a combined calculator and tape-measure device according to the present invention;

Figure 2 is a plan view of the device of Figure 1;

Figure 3 is an end elevation of the device of Figures 1 and 2;

Figure 4 is a view of the device of Figure 1 with the top/front cover removed to show diagrammatically the arrangement within the case of the device;

Figure 5 shows a first meter display for the device of Figure 1;

Figure 6 is a circuit diagram of a circuit for use in the device of Figures 1 to 5; and

Figures 7A, 7B and 7C are flow charts of software used to operate the device.

Referring to the drawings, a combined calculator and tape-measure device 1 comprises a plastics housing 2. Within the housing 2 is mounted a spring-loaded (not shown) tape storage spool 3 around which is wound a measuring tape 4. The end 5 of the tape 4 protrudes from the housing 2 through a slot 6 and is provided with an L-shaped end tab 7. A registration drum 8 is rotatably mounted in housing 2. The drum 8 is provided with five circumferentially spaced rotatable element or registration studs 9 and has a working diameter of 40.425mm (i.e. a circumference of 127mm or 5 inches). The tape 4 is provided at 25.4mm (1″) intervals with registration holes (not shown) for maintaining the tape 4 in register with studs 9 and hence with drum 8. The tape 4 passes from spool 3 around drum 8 and out of the housing through slot 6.

A disc 10 is coaxially mounted on one end of registration drum 8. The disc 10 bears around its periphery two concentric evenly distributed series 11, 12 of metallic indicia 13 to correspond to metric and imperial unit of length of the tape respectively. Each indicia 13 is produced by vapour deposition of metal onto the surface of the disc but could alternatively be produced by removal of intermediate metal portions by, for example, mechanical action or by chemical etching.

The outer circle 11 bears one hundred and twenty seven regularly spaced indicia 13, whilst the inner circle 12 bears forty regularly spaced indicia 13. It will be apparent that each interval between indicia 13 of outer circle 11 represents 1mm whilst the intervals between indicia 13 of inner circle 12 each represent 0.125 inches (i.e. 1/8 inch).

A switch key or button 16 is provided on the device 1 for selecting whether imperial or metric measurement is to be employed. Pairs of capacitive or optical sensors (not shown) are arranged respectively adjacent indicia circles 11, 12 to sense respectively the passage therepast of the indicia of circle 11 or circle 12 and the direction of rotation of disc 10. Signals from the sensors are fed to a sensor unit 14. As each indicium 13 passes the sensors, the selected sensor generates a pulse which is fed to a sensor unit 14 and thence to an electronic circuit carried upon a printed circuit board 15 mounted within housing 2.

Thus, as the tape 4 is drawn from or is retracted into the device 1 the drum 8 will rotate in register with the tape 4 and will cause the sensors to produce a series of capacitive or optical pulses in accordance with the degree of extension of the tape out of the housing 2.

The electronic circuit is arranged to receive these pulses and to produce an electrical output in terms of distance by which the tape 4 has been extended. A liquid crystal display 16 is mounted in housing 2 and displays that distance. When imperial measurement has been selected the display is in feet, inches and eighths of an inch, whilst in metric terms the display shows metres to two decimal places.

When the tape is completely retracted, the L-shaped end tab 7 extends into housing 2 and is arranged to operate a re-set switch (not shown) for resetting the extension distance to zero. The tab 7 may also act as an ON/OFF switch.

A mechanical lock button 17 is provided which can be slid between a locking position and an unlocking position for selectively locking the tape at any desired length of tape extension. A button 18 is provided on button 17 for entry of length data.

The numerical information relating to tape extension can be passed to a calculator 19 mounted in housing 2. In addition to possessing the usual numerical keys, arithmetic operator keys, clear keys and memory utilization keys, the calculator possesses additional keys 20, 21, 22 and 23.

When key 20 is pressed the length of the housing 2 is automatically added to the numerical data relating to the extension of the tape thereby permitting increased accuracy when, for example, measuring a room by holding the device against a back wall.

When key 21 is pressed once, the numerical data input into the calculator is automatically multiplied by the value of (pi) to provide an indication of circumference where the numerical data is the diameter of a circle. When key 21 is pressed twice, the numerical data is divided by two, squared and multiplied by (pi) to give an indication of circular area.

If key 22 is pressed then the calculator stores the numerical data and awaits the input of a second item of numerical data. The calculator will then automatically multiply the two data items to produce a numerical output relating to an areal measurement. If key 22 is pressed twice then the calculator will accept two additional inputs and then multiply the three data items to produce a numerical output relating to volume measurement.

In each case the computed data (as opposed to the directly measured data) is displayed on a second liquid crystal display 24. This same display 24 is used by the calculator to display the results of calculations when the device is in conventional calculator mode.

Key 23 causes the calculator to receive tape measurement data and to store it in a memory M, i.e. key 23 makes or breaks the connection between the tape-measure and the calculator.

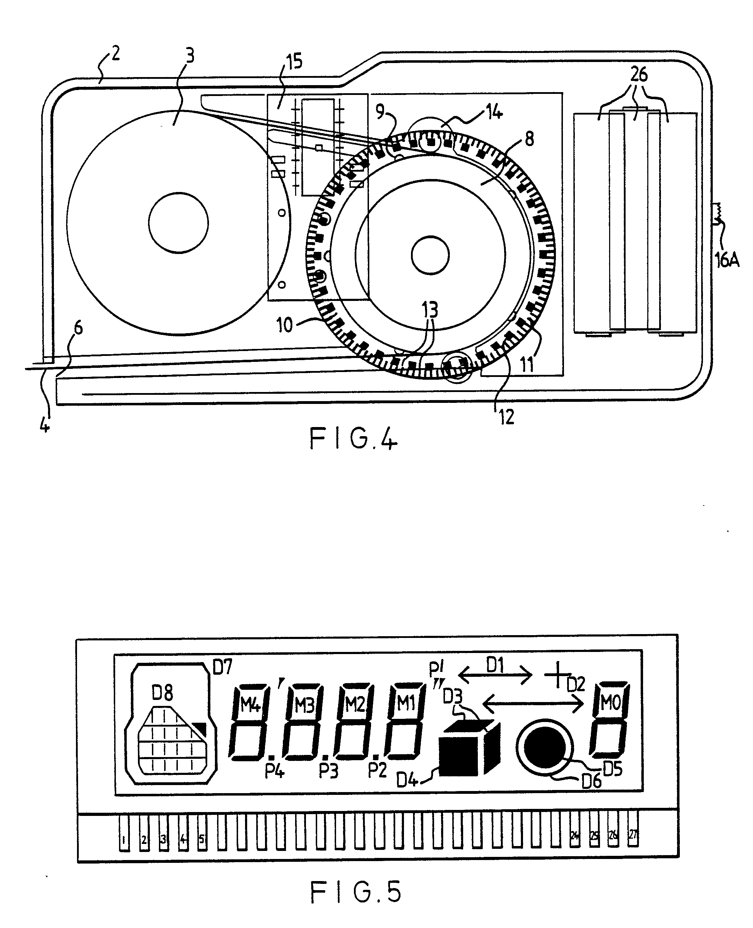

As is shown in Fig 5, the first liquid crystal display 16 not only displays numerical data concerning the direct measurements but also provides the user with information as to the operating mode of the device.

Specifically, $D_1$ will be lit if linear measurement only is being effected. $P_1$ will be lit if imperial measurements have been selected. Both $D_1$ and $D_2$ will be lit if rectangular area measurement has been selected, as will $D_4$, and $M_0$ will indicate how many items of information (i.e. 1 or 2) have been input into the calculator.

If circumference mode has been selected then $D_6$ is lit while if circular area has been selected then $D_5$ will be lit.

If rectangular volume mode is selected then $D_3$ and $D_4$ will be lit and $M_0$ will display the number of parameters so far input (i.e. 1, 2 or 3).

If there has been selected the mode which adds the case length to the linear measurement then $D_7$ is lit up. $D_8$ lights up when data from the tape-measure can be input into the calculator, i.e. when the connection between the tape-measure and the calculator is made.

If it is desired to perform non-standard arithmetical operation upon the length data, this may be done by pressing the memory recall button MR. This will allow the user to operate upon the recalled value.

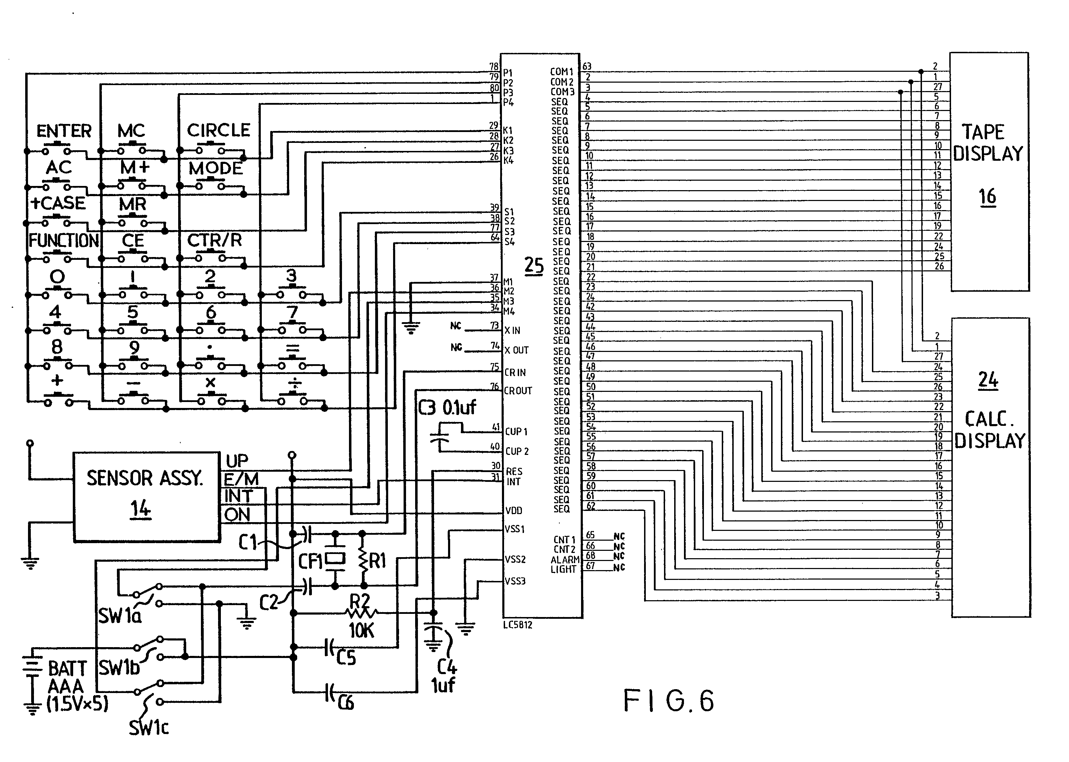

An embodiment of a circuit diagram for the device is shown in Fig 6. As may be seen the tape display 16 and the calculator display 24 are both connected with a programmable integrated circuit 25 (a Sanyo LC5812). This circuit receives input from the calculator keys, the sensor unit 14 and from the metric/imperial switch, and is connected to an ON/OFF switch.

It should of course be mentioned that the device is battery-operated, the batteries being shown in Fig. 4, designated 26.

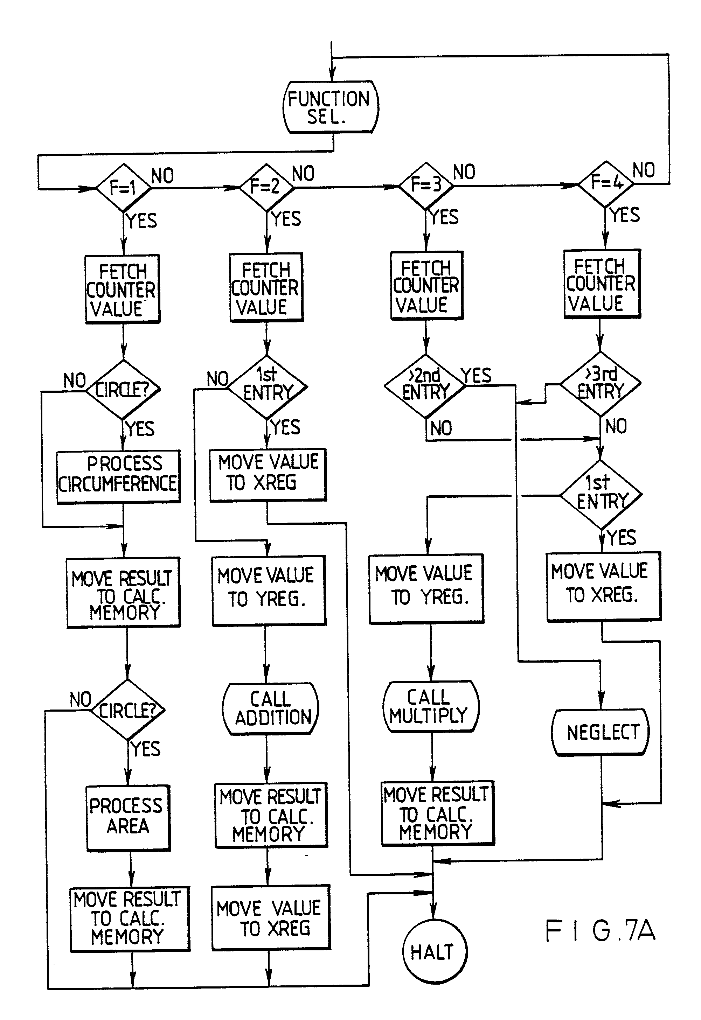

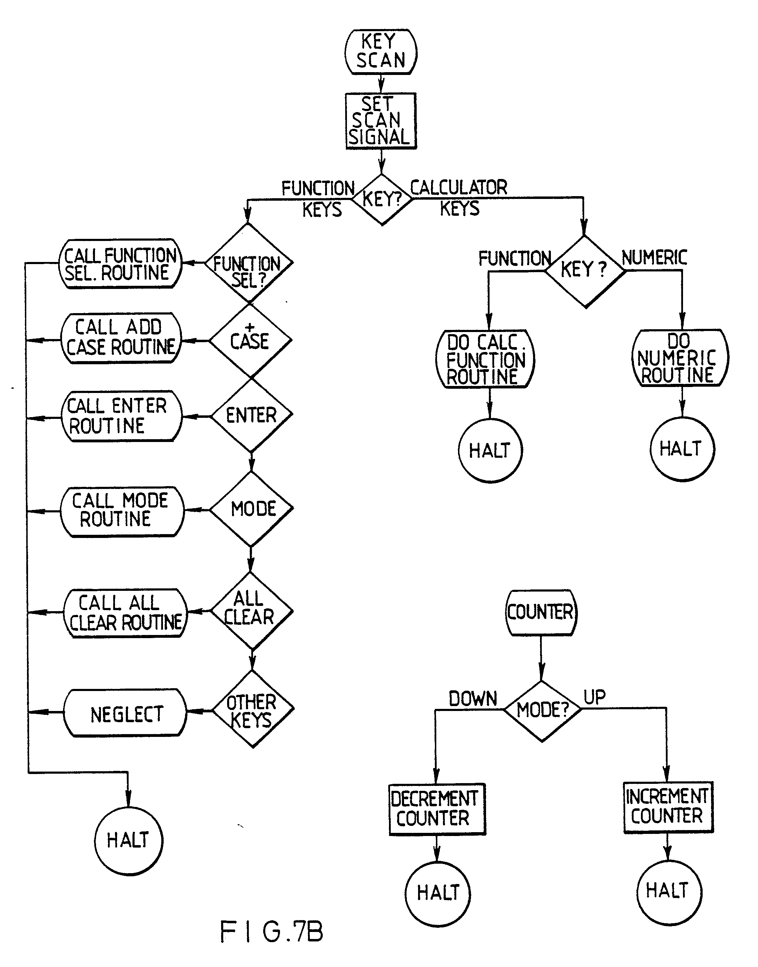

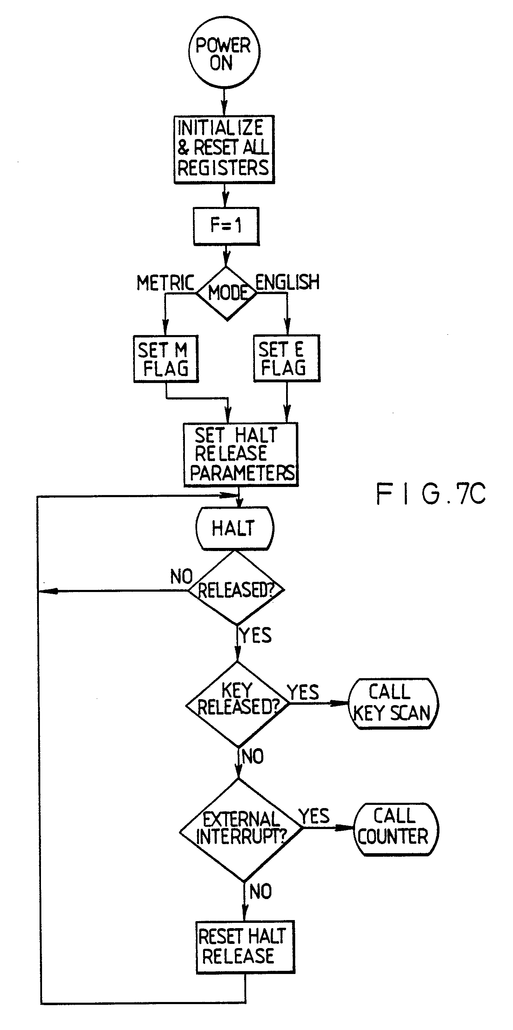

An embodiment of software for driving the tape measure and the calculator is shown in Figs 7A, 7B and 7C of the drawings. Fig. 7A is a flow chart of basic functions of the device, Fig. 7B is a flow chart of the special functions of the device and Fig. 7C is a flow chart of the software operations which take place when the various operating modes of the device are respectively selected. We believe that the operation of the flow charts will be clear to one skilled in the art.

It will be appreciated that by choosing an effective diameter for the registration drum 8 of 40.425 mm, which is also a convenient size for a hand held device, each series of indicia can be divided up into evenly distributed intervals, to provide imperial and metric length units. This has the advantage that no conversion between such units need by carried out by the electric circuitry reducing the complexity of the circuitry or compromises made in the conversions when such conversions must be provided. The registration drum may also have a diameter equal to multiples of 40.425 mm if desired and maintain the same advantages.

The invention may be performed otherwise than as has been particularly described. The invention includes within its scope all modifications, additions or variations within the scope of the appended claims.

## Claims

1. A tape-measure device which includes means for deriving numerical information in electronic form, corresponding to the length of tape drawn from the tape-measure, said means comprising:

a rotatable element adapted to rotate in register with the tape as the tape is drawn from and retracted into the tape-measure, said element bearing two evenly distributed series of indicia corresponding to metric and imperial units of length respectively,
reading means for reading said indicia and for producing an electronic signal providing said numerical information in electronic form.

2. A device according to claim 1 in which the number of indicia for each units of length in each series disposed on the rotatable element is so selected having regard to the diameter of the element as to provide a direct indication units of the length of tape drawn from or retracted into the tape-measure in imperial units and in metric units respectively.

3. A device according to claim 1 wherein the rotatable element has a disc mounted thereon at one side and the indicia are provided adjacent the periphery of the disc.

4. A device according to claim 3 and the indicia are notches on the periphery of the disc 5.

5. A device according to claim 3, in the indicia are holes or recesses spaced circumferentially about the surface of the disc.

6. A device according to claim 3, in which the indicia are a plurality of sensible elements disposed circumferentially about the surface of the disc.

7. A device as defined in claim 6 wherein the sensible elements are metallic and capable of being sensed by a capacitative or inductive method, or light-reflecting or absorbing elements capable of being sensed by an optical method.

8. A device according to claim 1, including a calculator in which the reading means comprises the display of the calculator, the said numerical information in electronic form is arranged to be passed internally to the calculator for the performance of mathematical or arithmetical operations thereupon.

9. A device according to claim 8 wherein the calculator is arranged to calculate selectively the circumference or the area of a circle whose diameter or radius corresponds to the length data measurement of the device.

10. A device according to claim 8 or 9 wherein the calculator is arranged to provide calculated volume data from three length data measurements of the device.

11. A device according to claims 1 to 10, in which the rotatable element has an effective diameter of 40.425 mm.

12. A device according to claim 11 in which in one series of indicia there are 127 indicia, each to represent a 1 mm unit of length.

13. A device according to claims 11 or 12, in which in the other series of indicia there are 40 indicia each to represent one eight of an inch unit of length.

FIG.1

FIG.2

FIG.3

FIG.4

FIG.5

FIG.6

EP 0 388 098 A1

F I G . 7A

FIG.7B

```
                    ┌─────────┐
                    │  POWER  │
                    │   ON    │
                    └────┬────┘
                         │
                         ▼
                 ┌───────────────┐
                 │  INITIALIZE   │
                 │ & RESET ALL   │
                 │  REGISTERS    │
                 └───────┬───────┘
                         │
                         ▼
                    ┌─────────┐
                    │  F = 1  │
                    └────┬────┘
                         │
                         ▼
          METRIC      ◇ MODE ◇      ENGLISH
       ┌─────────────╱         ╲─────────────┐
       │             ◇         ◇             │
       ▼                                     ▼
   ┌────────┐                          ┌────────┐
   │ SET M  │                          │ SET E  │
   │ FLAG   │                          │ FLAG   │
   └───┬────┘                          └───┬────┘
       │                                   │
       └──────────────┬────────────────────┘
                      ▼
              ┌───────────────┐
              │  SET HALT     │          F I G . 7C
              │  RELEASE      │
              │  PARAMETERS   │
              └───────┬───────┘
                      ▼
                 ┌─────────┐
                 │  HALT   │
                 └────┬────┘
                      ▼
         NO      ◇ RELEASED? ◇
    ◄────────────◇           ◇
                      │ YES
                      ▼
                 ◇   KEY    ◇    YES     ┌──────────┐
                 ◇ RELEASED?◇──────────► │   CALL   │
                 ◇          ◇            │ KEY SCAN │
                      │ NO               └──────────┘
                      ▼
                 ◇ EXTERNAL ◇   YES      ┌──────────┐
                 ◇INTERRUPT?◇──────────► │   CALL   │
                 ◇          ◇            │ COUNTER  │
                      │ NO               └──────────┘
                      ▼
              ┌───────────────┐
              │ RESET HALT    │
              │ RELEASE       │
              └───────────────┘
```

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 575 944 (PATRICK LIN) <br> * Whole document * <br> --- | 1,2,3,5 ,6,7,8, 12,13 | G 01 B 3/10 |
| Y | US-A-4 242 574 (W.W. GRANT) <br> * Column 1, line 35 - column 6, line 3; figures * <br> --- | 1,2,3,5 ,6,7,8, 12,13 | |
| A | WO-A-8 800 776 (R.J. CARE) <br> * Page 2, line 1 - page 4, line 23; figures 1,3,4,7; page 5, line 24 - page 8, line 18; page 10, line 21 - page 15, line 8 * <br> --- | 1,2,3,4 ,8,9,10 ,11 | |
| A | US-A-4 181 960 (SHARP K.K.) <br> * Entire document * <br> --- | 1-13 | |
| A | WO-A-8 807 171 (PRÜFTECHNIK DIETER BUSCH + PARTNER) <br> * Entire document * <br> --- | 1-13 | TECHNICAL FIELDS SEARCHED (Int. Cl.5) |
| A | US-A-4 213 035 (SHARP K.K.) <br> * Entire document * <br> ----- | 1-13 | G 01 B 3/00 |

The present search report has been drawn up for all claims

| Place of search | Date of completion of the search | Examiner |
|---|---|---|
| THE HAGUE | 03-07-1990 | BROCK T.J. |